# EUROPEAN PATENT APPLICATION

(11) **EP 3 653 281 A1**
(43) Date of publication of application: **20.05.2020**
(21) Application number: 19397532.3
(22) Date of filing: 01.11.2019
(51) Int. Cl.: B01D 53/14

(54) **A SCRUBBER FOR SCRUBBING EXHAUST GAS OF A COMBUSTION ENGINE OF A SHIP, A METHOD FOR ADAPTING AN OLD SCRUBBER, AND A METHOD FOR MAINTAINING A SCRUBBER**

(30) Priority: 16.11.2018 FI 20185967
(71) Applicant: Valmet Technologies Oy, 02150 Espoo (FI)
(72) Inventor: FABRITIUS, Jere, 37150 NOKIA (FI)
(74) Representative: Berggren Oy, Tampere

(57) **Abstract**

The invention relates to a scrubber (100) for scrubbing exhaust gas of a combustion engine (510). The scrubber (100) comprises: a shell (110) limiting an interior (102) of the scrubber (100), the shell (110) extending in a longitudinal direction (Sz); an inlet (112) for letting in the exhaust gas; and a first outlet (114) for letting out scrubbed exhaust gas. The scrubber comprises, in the interior (102), a first spray piping (210) configured to spray scrubbing liquid, and in between the inlet (112) and the first spray piping (210), a perforated plate (300) suitable for use as a platform for maintaining at least the first spray piping (210), wherein a distance (d₁) between the perforated plate (300) and the first spray piping (210) is at most two metres to enable maintenance of the first spray piping (210). An arrangement (500, 505), such as a ship (505), comprising the scrubber (100) and a combustion engine (510). A method for adapting an old scrubber to form a scrubber as disclosed above. A method for maintaining a scrubber (100) as disclosed above.

## Description

### Technical field

The invention relates to a wet scrubber for scrubbing exhaust gas, i.e. flue gas, of a combustion engine, in particular a combustion engine of a ship. The invention relates to maintenance of a wet scrubber. The invention relates to desulphurization of exhaust gases, i.e. flue gases. The invention relates to ships with reduced suplhur oxide emissions.

### Background

Fossil fuel combustion is used in industrial processes for many different purposes, including combustion engines. Depending on the quality of the fuel, the flue gases (i.e. exhaust gases) may contain various amounts of pollutants, including sulphur oxides (SOx). Marine vessels, i.e. ships, typically include combustion engines and use low grade fuels that both result in high levels of SOx and particles present in the exhaust gas (i.e. flue gas). One possibility to reduce the content of SOx in the exhaust gas of marine vessels is by using low sulphur content fuels. Low sulphur content fuels are, however, far more expensive than normal low grade fuels. Because of the high costs of the low sulphur content fuels, other solutions to reduce the SOx content in the exhaust gas have been developed. Most of the flue gas desulphurization or exhaust gas desulphurization technologies use wet scrubbing processes in which the emitted exhaust/flue gases are brought into intimate contact with an aqueous scrubbing solution. The aim of these processes is to provide high absorption efficiencies and to remove, or substantially reduce, the concentration of particles, droplets or substances in the exhaust/flue gas that are scrubbed. The scrubbing solution may be water, seawater or any other aqueous solution of one or more compounds known to bind, or absorb, one or more of the constituencies of the exhaust/flue gas to be scrubbed. Acidic gases as such as SOx are normally removed from a solution by scrubbing with an alkaline solution, such as an aqueous solution of an alkaline compound, such as caustic soda or other alkaline substances. A scrubber includes nozzles for spraying scrubbing liquid onto exhaust/flue gas. The nozzles are connected to spray piping for conveying the scrubbing liquid to the nozzles. Marine scrubbers for scrubbing exhaust gases exhausted from a marine engine are known from the publications EP 1 857 169, US 3 781 407, and WO99/44722. The scrubbers disclosed therein operate in a closed-loop mode, a semi closed-loop mode, and in an open-loop mode, respectively.

In use, the nozzles and/or the spray piping may corrode. Moreover, it has been found that in scrubbers for combustion engines, in particular combustions engines of ships, where the scrubber needs to be sufficiently small and lightweight, the nozzles corrode locally, i.e. more rapidly at some places than other places. The corrosion seems to result at least partly from the scrubbing solution forming with the sulphur oxide an acidic aqueous solution, which corrodes the piping and/or nozzles. Therefore, a scrubber needs to maintained from time to time. Depending on the location of the nozzles and/or spray piping, the maintenance may be hard.

### Summary

It has been noticed that when the flow of the exhaust gas inside the scrubber is more even, the corrosion problems are less localized. As a result, the scrubber needs maintenance less frequently. The flow of the exhaust gas can be made more even by applying a perforated plate into the scrubber. Moreover, It has been noticed that the perforated plate can be used as a platform for maintaining the spray piping. In this way, maintenance is easier, since supports, such as ladders, need not be provided into the scrubber for maintenance, because the perforated plate can be used for the purpose. The invention is disclosed in more specific terms in claim 1. Still further, the scrubber can be maintained by using the perforated plate as a support, as indicated in claim 15.

An existing scrubber, i.e. old scrubber, can be adapted to form a scrubber according to the invention. Therefore, the invention concerns also a method for adapting an old scrubber to form a scrubber according to the invention. This has been disclosed in more specific terms in claim 13.

In an embodiment, a supportive spray piping is configured to support the perforated plate.

### Brief description of the drawings

The drawings illustrate the invention. In the drawings, the direction Sz depicts a longitudinal direction of the scrubber, which, in a typical use, is vertical. The other directions Sx and Sy are perpendicular to Sz and to each other.
- Fig. 1 a: shows a ship equipped with a combustion engine and a scrubber,
- Fig. 1b: shows an arrangement of a combustion engine and a scrubber,
- Fig. 2a: shows, in a side view, an embodiment of a scrubber,
- Fig. 2b: shows an embodiment of a scrubber,
- Fig. 2c: shows an embodiment of a scrubber used with an open loop circulation of scrubbing liquid,
- Fig. 2d: shows an embodiment of a scrubber used with a closed loop or semi closed loop circulation of scrubbing liquid,
- Figs. 3a to 3c: show, in a top view, perforated plates,
- Figs. 4a: shows, in a top view, fixing a perforated plate to scrubber,
- Figs. 4b: shows, in a side view, fixing a perforated plate to scrubber,
- Figs. 4c and 4d: show, in a top view, fixing a perforated plate to scrubber,
- Figs. 5a to 5d: show, in a top view, embodiments of spray pipings, and mutual relations of different spray pipings,
- Figs. 5e and 5f: show, fixing members for fixing spray piping to a shell of a scrubber,
- Figs. 6a and 6b: show embodiments of a scrubber,
- Figs. 7a to 7c: show in a top view, embodiments of spray pipings, and mutual relations of different spray pipings,
- Fig. 8: shows a reinforced perforated plate, and
- Fig. 9: shows a perforated plate constituted from parts.

### Detailed description

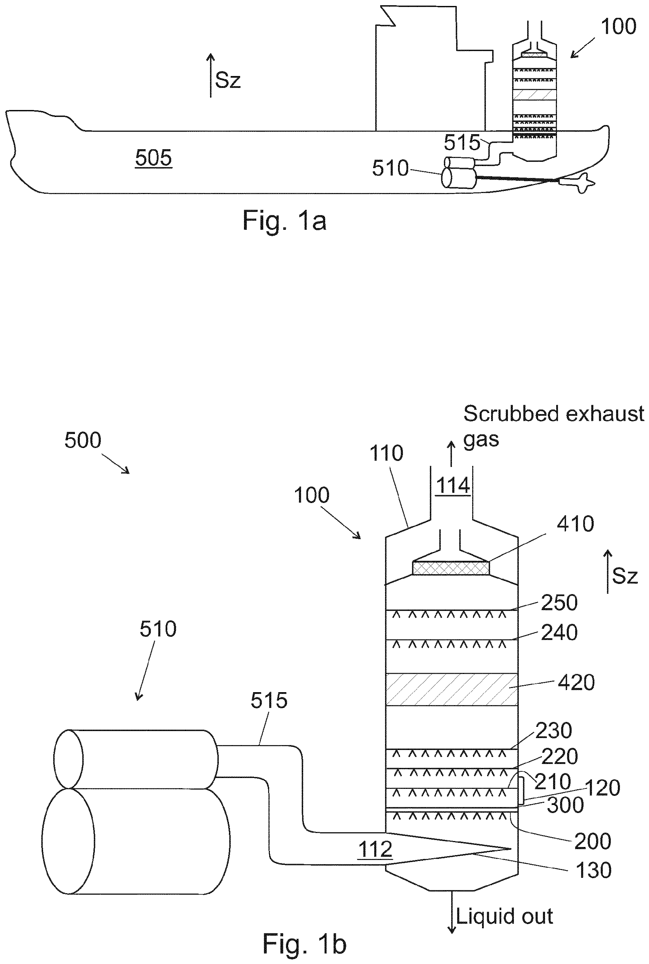

Fig. 1a shows a ship 505 comprising a combustion engine 510 and a scrubber 100. A ship 505 may comprise a diesel engine as the combustion engine 510. As indicated in Fig. 1b, a scrubber 100 may be used in an arrangement 500 that comprises a combustion engine 510, e.g. a diesel engine, and a scrubber 100, even if the arrangement 500 is not a ship 505 or a part thereof. The arrangement 500, as well as a ship 505, comprises an exhaust gas channel 515 configured to convey exhaust gas from the combustion engine 510 to the scrubber 100. The direction Sz indicates a longitudinal direction of the scrubber 100. The longitudinal direction Sz is, in typical use, vertical and reverse to gravity. Preferably, the scrubber 100 is configured to receive unprocessed exhaust gas from the combustion engine 510. For example, an embodiment of an arrangement, such as a ship, is configured not to spray liquid onto the exhaust gases before the inlet 112 of the scrubber 100. As another example, an embodiment of an arrangement, such as a ship, does not comprise an electrostatic precipitator in between the combustion engine and the inlet 112 of the scrubber 100. As another example, an embodiment of an arrangement, such as a ship, does not comprise a filter in between the combustion engine and the inlet 112 of the scrubber 100. An electrostatic precipitator and/or a filter could be used for removing particles from the exhaust gas. However, particularly on a ship, there seldom is sufficient space for such cleaning equipment.

As for the terms "exhaust gas" and "flue gas", the former is commonly used in the context of combustion engines of ships, while the latter is commonly used in the context of incinerators; both terms describing the gas resulting from combustion. In this description, the term "exhaust gas" is used for the gas resulting from combustion, in particular from combustion in a combustion engine. The term "flue gas" is used, e.g. above, interchangeably with the term "exhaust gas".

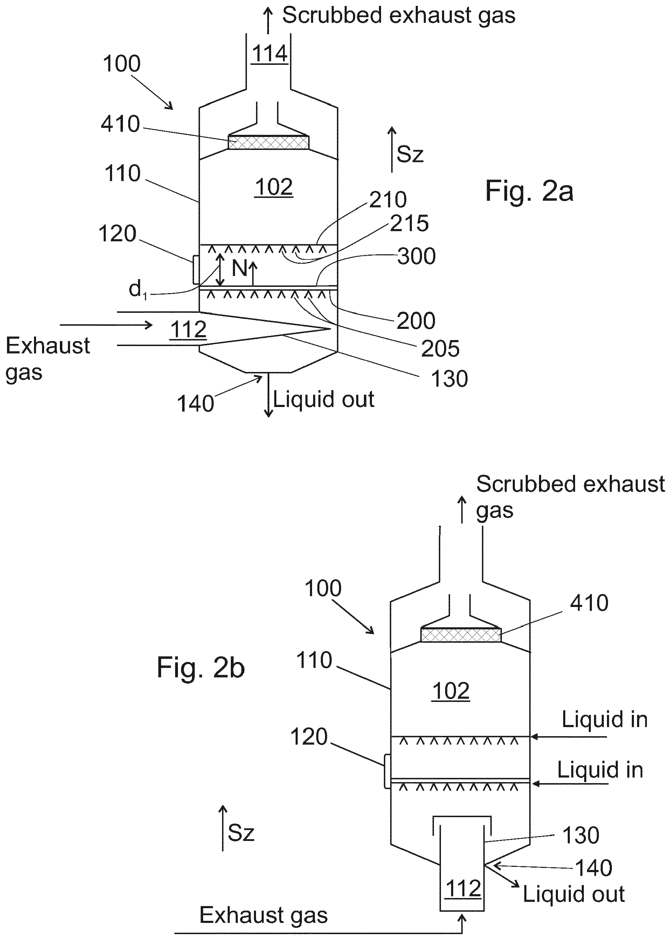

An embodiment of a scrubber 100 for scrubbing exhaust gas of a combustion engine 510 is shown in Fig. 2a. The scrubber 100 comprises a shell 110 limiting an interior 102 of the scrubber 100. The shell 110 extends in the longitudinal direction Sz of the scrubber 100. The shell 110 may be made of material suitably heat and corrosion resistant material. When the scrubber 100 is used, the scrubbing liquid circulating therein maintains the temperature reasonably low. However, particularly a ship 505 may be operated in such a way that the exhaust gas is not always scrubbed, but only released through the scrubber 100 without using any scrubbing liquid. Thus, the temperature in the interior 102 of the scrubber 100 may rise to approximately 200 °C - 390 °C. Therefore, the shell 110 preferably comprises at least one of aluminium, stainless steel, and titanium.

The scrubber 100 comprises an inlet 112 for letting in the exhaust gas to the interior 102. The scrubber comprises a first outlet 114 for letting out scrubbed exhaust gas from the interior 102. In the interior 102 in between the inlet 112 and the first outlet 114, the scrubber 100 comprises a first spray piping 210 configured to spray scrubbing liquid into the interior 102. The first spray piping 210 comprises first nozzles 215 for spraying the scrubbing liquid. The scrubbing liquid is sprayed as droplets so as to have a large contact area between the scrubbing liquid and the exhaust gas scrubbed.

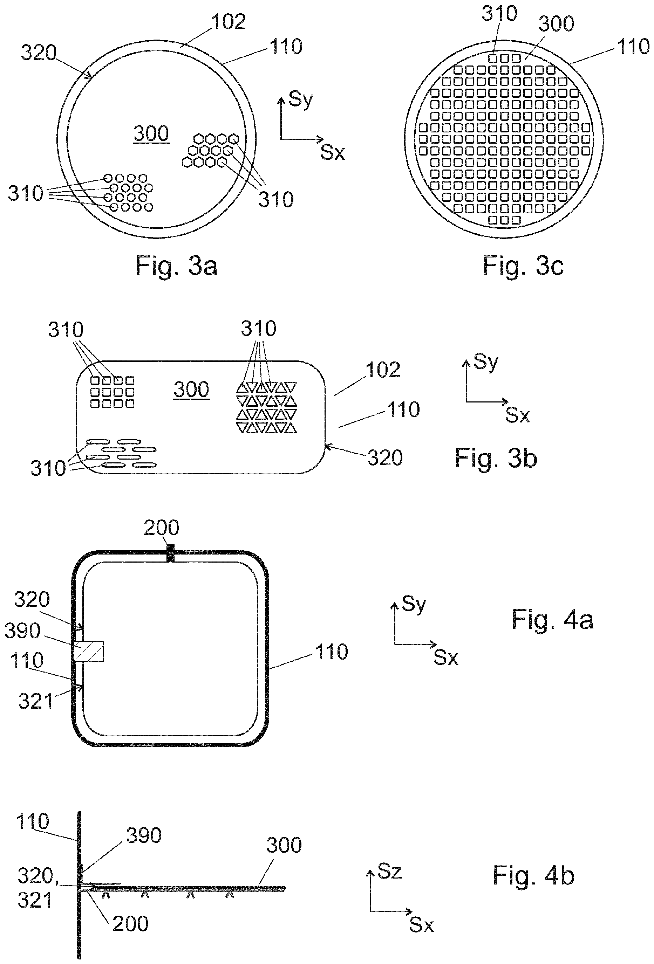

In order to make the exhaust gas flow even (i.e. uniform) within the interior 102, the scrubber 100 comprises, downstream from the inlet 112 and upstream from the first spray piping 210 (i.e. in between the inlet 112 and the first spray piping 210), a perforated plate 300. Herein the terms upstream and downstream refer to the direction of flow of the exhaust gas, even if droplets of the scrubbing liquid may propagate in a reverse direction. The material and the shape of the perforated plate 300 are selected such that perforated plate 300 is suitable for use as a platform for maintaining at least the first spray piping 210. The perforated plate 300 is suitable for use as a platform for maintaining at least the first spray piping 210 when its side facing towards the first outlet 114 (i.e. a first side) is substantially even. For example, the first side of the perforated plate 300 may be free from such elements that are fixed to the perforated plate 300 and protrude from the perforated plate at least 5 cm. For example, the first side of the perforated plate 300 may be free from protrusions. Moreover, the sizes and locations of the apertures 310 of the perforated plate 300 are selected such that the perforated plate 300 spreads the exhaust gas flow to the interior 102. As an example, the apertures 310 may be evenly distributed as indicated in Fig. 3c.

Referring still to Fig. 2a, the perforated plate 300 is arranged in such a position, that the perforated plate 300 has a normal N, of which direction is parallel to (e.g. unidirectional with) the longitudinal direction Sz. Moreover, to enable a person to maintain the first spray piping 210 while being on the perforated plate 300, a distance d₁ between the perforated plate 300 and the first spray piping 210 is at most two metres. This ensures that a normal person standing on the perforated plate 300 without auxiliary supports can maintain the first spray piping 210. For this reason, preferably, the distance d₁ between the perforated plate 300 and the first spray piping 210 is at most 1.5 metres or at most 1 metre. The distance d₁ refers to a distance in the longitudinal direction Sz. Still further, to enable a person to enter the interior 102 of the scrubber 100, the shell 110 comprises a hatch 120 suitable for a person to enter the interior 102. Commonly the hatch 120 is also referred to as a manway. As is evident, the hatch 120 can be used to open and close an aperture of the shell 110, the aperture being sufficiently large for a person to enter the interior 102.

As indicated in Fig. 2a, the first spray piping 210 is arranged on a first side of the perforated plate 300. The perforated plate 300 may comprise a second hatch so that the operator can move from a second side of the perforated plate 300 to the first side thereof. However, preferably, at least a part of the hatch 120 is arranged, in the longitudinal direction Sz, in between the perforated plate 300 and the first outlet 114. Thus, when an operator enters the interior through the hatch 120, the operator is on the first side of the perforated plate 300 (or the operator is at least able to enter the first side), where also the first spray piping 210 to be maintained is arranged. Moreover, preferably at least a part of the hatch 120 is arranged at most two metres from the perforated plate 300. Thus, the operator does not need ladders or stairs to go to the perforated plate 300 from the hatch 120. More preferably, at least a part of the hatch 120 is arranged at most 1.5 metres, at most 1.0 metre, or at most 0.5 metres from the perforated plate 300. A small distance is preferable from the point of view of safety, when ladders or similar are not used.

Preferably, at least a part of the hatch 120 is arranged in the longitudinal direction Sz, in between the perforated plate 300 and the first spray piping 210. This also makes it more easy to enter a proper location for maintaining the first spray piping.

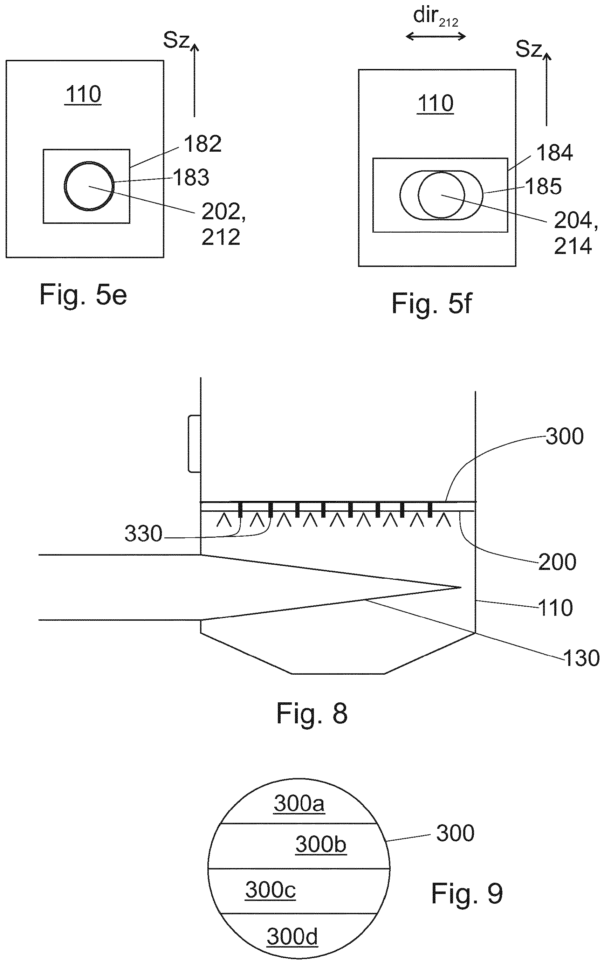

The perforated plate 300 is preferably reasonably thin in order for it to be lightweight. In a preferable embodiment, a thickness of the perforated plate 300 is at most 20 mm, preferably at most 10 mm, such as from 2 mm to 10 mm. This thickness does not include reinforcing elements 330, which may be fixed to the perforated plate 300 if needed. Thus, in an embodiment, the perforated plate 300 is made from a plate having a thickness of at most 20 mm, preferably at most 10 mm. If the perforated plate 300 is made of very thin material, depending on how the plate 300 is supported, reinforcing elements 330 may be applied as detailed below and in Fig. 8.

The perforated plate 300 may be made of suitable heat and corrosion resistant material, such as a metal or a plastic. Given that if exhaust gases are occasionally only conveyed through the scrubber without scrubbing them, the interior 102 may become hot as indicated above. Thus, the perforated plate 300 may comprise metal or metals, of which melting temperature is/are at least 500 °C. Preferably, the perforated plate 300 consists of a metal or metals, of which melting temperature is/are at least 500 °C. Examples include stainless steel, aluminium, and titanium.

As indicated in the Figures, and as clear from the discussion above, the scrubber 100 is free from such a structure that prevents maintenance of the first spray piping 210 from the perforated plate 300. For example, the scrubber 100 is free from such a plate that is arranged in between the perforated plate 300 and the first spray piping 210, has a normal to the longitudinal direction Sz, and has a cross sectional are of at least 20 % of the cross sectional area of the interior 102 at that location. Alternatively or in addition, the scrubber 100 may be free from a packed bed that is arranged in between the perforated plate 300 and the first spray piping 210 and has a cross sectional are of at least 20 % of the cross sectional area of the interior 102 at that location. Alternatively or in addition, the scrubber 100 may be free from a packed bed that is arranged in between the perforated plate 300 and the first spray piping 210.

The perforated plate 300 may be supported by a beam or similar from a second side of the perforated plate 300, the second side being opposite to the first side of the perforated plate 300. The support beam may be fixed to the shell 110. However, having support beams within the scrubber 100 increases the weight and size thereof. Particularly in a ship 505, the scrubber 100 should be small and lightweight. Typically, the scrubber 100 is arranged on a deck of the ship 505, whereby increasing the mass of the scrubber makes the ship 505 less stable.

Typically, a scrubber 100 comprises multiple spray pipings in order to distribute the scrubbing liquid evenly into the scrubber. It has been found that one of the spray pipings may be used to support the perforated plate 300. This makes the scrubber 100 more compact and lightweight compared to a solution, wherein a special support would be used for the purpose. Thus, in a preferable embodiment, the scrubber 100 comprises, in the interior 102 downstream from the inlet 112 and upstream from the perforated plate 300 (i.e. in between the inlet 112 and the perforated plate 300), a supportive spray piping 200 configured to spray scrubbing liquid into the interior 102. The supportive spray piping 200 is configured to mechanically support the perforated plate 300 from a second side of the perforated plate 300, the second side being opposite to the first side of the perforated plate 300. In an embodiment, the supportive spray piping 200 is in contact with the perforated plate 300 at least when maintaining the first spray piping 210. For example, even if a gap was left in between the perforated plate 300 and the supportive spray piping 200, when an operator is on the perforated plate 300, the perforated plate 300 may bend in such a way that it contacts the supportive spray piping 200. The supportive spray piping 200 may be in contact with the perforated plate 300 also when not used for maintenance. Even if the scrubber comprises a supportive spray piping 200, the scrubber 100 may comprise reinforcing elements 330 that are fixed to the perforated plate 300 on the second side of the perforated plate 300, as indicated in Fig. 8. The supportive spray piping 200 may be maintained e.g. from a bottom of the scrubber. The scrubber may comprise a further hatch (not shown) suitable for a person to enter the interior 102 to a location in between the inlet 112 and the supportive spray piping 200. At least a part of the further hatch may be arranged, in the longitudinal direction Sz, in between the inlet 112 and the supportive spray piping 200. Thus, the operator may enter the interior 102 through the further hatch such that he/she may maintain also the supportive spray piping 200 without passing through the perforated plate (e.g. through a second hatch, which could be arranged in to perforated plate 300 itself).

In an embodiment, the perforated plate 300 is at least laterally movable with respect to the supportive spray piping 200. For example, in an embodiment, the perforated plate 300 is not fixed to the supportive spray piping 200 by welding or with a screw or a bolt. In an embodiment, the perforated plate 300 is not fixed to the supportive spray piping 200. When the perforated plate 300 is movable with respect to the to the supportive spray piping 200, the perforated plate 300 and the supportive spray piping 200 may thermally expand irrespective of each other. If the supportive spray piping 200 comprises a supportive main pipe 202, the perforated plate 300 may be movable with respect to the to the supportive main pipe 202. For example, the perforated plate 300 need not be fixed to the supportive main pipe 202 by welding or with a screw or a bolt. If the supportive spray piping 200 comprises supportive transversal pipes 204, the perforated plate 300 is preferably movable with respect to the supportive transversal pipes 204. For example, the perforated plate 300 need not be fixed to the supportive transversal pipes 204 by welding or with a screw or a bolt.

The movability of the perforated plate 300 with respect to the supportive spray piping 200 is beneficial, since the temperature of the pipe 200 and plate 300 may be e.g. around 30 °C when the engine 510 is in operation and scrubbing liquid is used; and e.g. around 200 °C to 390 °C when the engine 510 is in operation and scrubbing liquid is not used. In addition, the temperature of the perforated plate 300 may be different from the temperature of the pipe 200, when the engine 510 is in operation and scrubbing liquid is used. Both these issues may lead to dissimilar thermal expansion of the perforated plate 300 and the supportive spray piping 200. If they were fixed to each other in an manner not allowing for movement, thermal stress would be imposed into the structure.

Referring to Figs. 2a and 2b, an embodiment of the scrubber 100 comprises a droplet separator 410. The droplet separator 410 is configured to separate droplets from the scrubbed exhaust gas before the first outlet 114. The droplets form mist. Therefore, a droplet separator 410 is commonly called a mist eliminator.

Referring to Figs. 2a and 2b, an embodiment of the scrubber 100 comprises a gas distributor 130 configured to distribute exhaust gas into the interior 102. Preferably the gas distributor 130 is configured to distribute exhaust gas evenly into the interior 102. The gas distributor 130 is arranged upstream from the perforated plate 300 and downstream from the inlet 112. Preferably, the gas distributor 130 is arranged upstream from the supportive spray piping 200 and downstream from the inlet 112.

Referring to Figs. 2a and 2b, the scrubber 100 comprises a second outlet 140 for letting out scrubbing liquid from the interior 102. In particular, when the scrubber 100 is configured to be used on a ship 505, the second outlet 140 is arranged, in use, to a lower part of the scrubber 100. This has the effect that the scrubbing liquid will not accumulate in the scrubber 100. Accumulated liquid would increase the mass of the scrubber and reduce stability of the ship 505. Therefore, in an embodiment, the second outlet 140 is arranged in the longitudinal direction Sz to an outermost position of the shell 110 so as to prevent scrubbing liquid from accumulating in the interior 102 of the shell 110 in use. As indicated in Figs. 2a and 2b, the second outlet 140 is also arranged to such an outermost position of the shell 110 that is at another end of the shell 110 than the first outlet 114. As indicated in Figs. 1a, 2a, and 2b, in use, the second outlet 140 is arranged in a bottommost part of the shell 102. However, the exhaust gas may be conveyed to the interior 102 from below the shell 110, as indicated in Fig. 2b. For example, a gas distributor 130 or other gas channel may extend to a lower position than the shell 110, even if the second outlet 140 arranged at an outermost position of the shell 110.

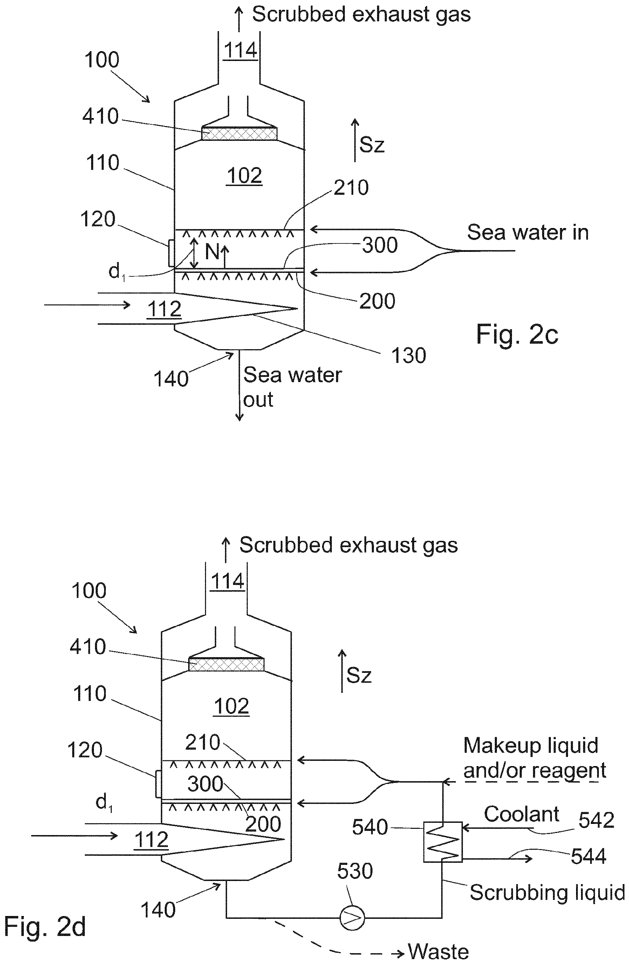

Figs. 2c and 2d illustrate operating principles of the scrubber. Open-loop, closed-loop, and semi closed-loop operating principles are known from prior art. Referring to Fig. 2c, sea water without a reagent may be used as the scrubbing liquid. This solution uses a substantial amount of sea water and conveys the impurities to sea. This operation principle is often called as open-loop.

Fig. 2d illustrates closed-loop and semi closed-loop solutions. In a closed-loop solution, the same scrubbing liquid is circulated within the scrubber 100. Some reagent may be added to the circulating scrubbing liquid, as indicated in the figure. A pump 530 is used to circulate the scrubbing liquid. Suitable reagents include alkalines, i.e. such reagents that form an alkaline solution with water. Such reagents include hydroxides of elements from the group I or II of the periodic table of elements excluding hydrogen, in particular sodium, potassium, magnesium and calcium hydroxides NaOH, KOH, Mg(OH)₂, and Ca(OH)₂. Other suitable reagents include oxides of elements from the group I or II of the periodic table of elements excluding hydrogen, in particular sodium and magnesium oxides Na₂O and MgO. When reacted with water, these form hydroxide.

In case the scrubber is run in a closed-loop mode, the scrubbing liquid is preferably made of fresh water and alkaline, i.e. the scrubbing liquid is substantially free from chloride ions (Cl⁻), even if it may comprise sodium, e.g. from sodium hydroxide. In case the scrubber is run in a semi closed-loop mode, the scrubbing liquid may be made of sea water and alkaline. Waste may be discharged from the process, as indicated in Fig. 2d. The waste may be separated from the scrubbing liquid by means of filters, centrifugation or any other means to separate solid particles from a liquid. In a semi closed-loop solution, the waste may comprise a substantial amount of water.

When using the scrubber in closed-loop mode or semi-closed loop mode, preferably, the scrubbing liquid is cooled with a heat exchanger 540. This has two effects. First, cooling the scrubbing solution prevents its evaporation, which may be useful, if fresh water is used in the scrubbing solution, since in general, there is a shortage of fresh water on a ship. Second, the sulphur oxide of the exhaust gas is more soluble to cold liquid than to warm liquid. Thus, cooling the scrubbing solution also improves the scrubbing efficiency. As indicated in Fig. 2d, sea water can be used as the heat exchange medium in the heat exchanger 540. In a preferable embodiment, a ship 505 comprises, further to the components of Fig. 1a, a pump 530 for circulating the scrubbing solution from the second outlet 140 to the first spray piping 210 and a heat exchanger 540 configured to cool the circulating scrubbing solution. Moreover the ship comprises an inlet piping 542 configured to convey sea water to the heat exchanger 540 and an outlet piping 544 configured to convey sea water from the heat exchanger 540. The sea water may be conveyed to/from the sea, on which the ship sails.

When using the scrubber in a closed-loop mode or a semi closed-loop mode, some makeup liquid (fresh or sea water optionally with a reagent) may be fed to the scrubber. The makeup liquid may be fed directly to interior of the scrubber through a separate line (not shown), or it may be fed to the circulation of the scrubbing liquid as indicated in Fig. 2d. Moreover, the makeup liquid may be made by mixing the reagent with water (fresh water or sea water) before feeding it to the circulation or the scrubber.

It is noted that the same scrubber can be run subsequently in both closed-loop mode and open-loop mode. The ability to be run in both modes is beneficial, since depending on regulations, running in open-loop mode may be acceptable, and typically it is more cost effective to use a scrubber in open-loop mode.

Referring to Figs. 3a, 3b, and 3c the perforated plate 300 limits apertures 310. The perforated plate 300 extends laterally to an edge 320 of the perforated plate 300. The perforated plate 300 is configured to let the scrubbing liquid flow from the first side of the perforated plate 300 via apertures 310 of the perforated plate 300 to the second side of the perforated plate 300. Moreover, particularly in open-loop sea water scrubbers (or scrubber that are run in an open-loop mode), the amount of scrubbing liquid may be substantial. Therefore, the apertures 310 of the perforated plate are sufficiently large. However, in order for the perforated plate 300 to be usable as a platform for maintenance, the apertures 310 should not be too large. Still further, the apertures 310 of the perforated plate cover a substantial part of the cross sectional area of the perforated plate. Both these features have also the effect that the exhaust gas flows relatively easily from the second side of the perforated plate 300 via apertures 310 of the perforated plate 300 to the first side of the perforated plate 300. However, in order to level out non-uniformities of the flow of exhaust gas, the apertures 310 of the perforated plate 300 should not cover too large a part of the cross sectional area of the perforated plate. Moreover, the perforated plate 300 should be large compared cross-section of the interior so as not to guide the exhaust gas to regions in between the plate 300 and the shell.

For reasons of levelling out the exhaust gas flow, in an embodiment, the perforated plate 300 including the apertures 310 covers at least 80 % of a cross-sectional area of the interior 102, the cross-sectional area being limited by the shell 110. Herein the cross-sectional area of the interior 102 refers to the cross-sectional area of the interior 102 at the location of the perforated plate 300. Moreover a total area of the apertures 310 is from 33 % to 95 % of the cross-sectional area of the perforated plate 300, the cross-sectional area of the perforated plate 300 including the total area of the apertures 310. For example, in Fig. 3a, the shell 110 limits the interior 102, which has a cross-sectional area. Moreover, the perforated plate 300 is somewhat smaller than the cross-section of the interior 102. The area covered by the perforated plate 300 and its apertures 310 is the area limited by the edge 320 of the perforated plate 300. The edge will be discussed in more detail below. Moreover, in order to allow the scrubbing liquid to flow through the apertures 310, in an embodiment, the perforated plate 300 limits apertures 310 having an area of at least 25 square mm, i.e. (mm)², often denoted by mm². Moreover, in order to support a person standing on the perforated plate 300, in an embodiment, the perforated plate 300 limits apertures 310 having an area of at most 5000 square mm such as at most 2500 square mm. Preferably, the perforated plate 300 does not limit an aperture 310 that has an area greater than 5000 square mm. More preferably, the perforated plate 300 does not limit an aperture 310 that has an area greater than 2500 square mm. Preferably, the apertures 310 are uniformly distributed throughout the perforated plate 300 in order to level out flow of exhaust gas.

Referring to Figs. 3a to 3c, the shape of the apertures may be selected according to needs. Suitable shapes for the apertures include circular, oval, rounded square, and rounded other rectangle. Preferably, a length of an aperture 310 is greater than a width of the aperture 310, wherein the width is measured perpendicular to the length. More preferably, the length of an aperture 310 is at least 50 % greater than the width of the aperture 310. This has the effect that the shape of the aperture 310 levels out the flow effectively, and a cross sectional area of the aperture can be made reasonably large without posing a safety risk to an operator standing on the perforated plate 300. As indicated in Figs. 3a, 3b, and 4a a shape of the cross section of the scrubber may be selected according to needs. Typically the layout of the ship 505 determines the shape of the scrubber. Most common shapes include circular and rounded rectangles.

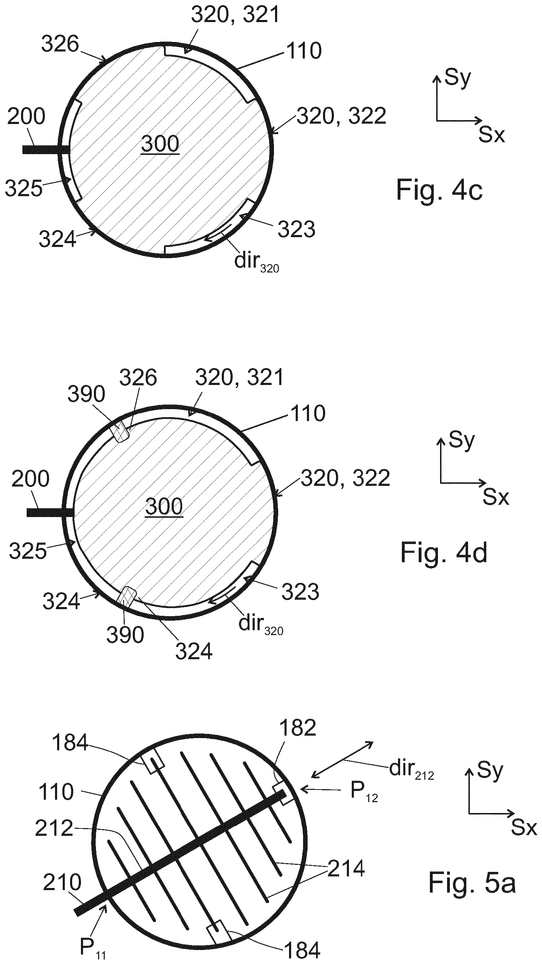

Figs. 4a to 4d indicate how the perforated plate 300 is preferably arranged in its place. Fig. 4a is a top view, whereby the supportive spray piping 200 is mostly left behind the perforated plate 300. Fig. 4b is a side view of a part illustrated in Fig. 4a. As indicated in these figures, preferably, at least a first primary part 321 of the edge 320 of the perforated plate 300 is separated from shell 110. It has been found that this has the effect that the scrubbing liquid flowing through a gap between the first primary part 321 of the edge 320 and the shell 110 rinses also such parts of the edge 320 of the plate 300 that are connected to the shell, e.g. the secondary parts 322, 324, 326 of Fig. 4c.

In Figs. 4a, 4b, and 4d, the perforated plate 300 is arranged in between the supportive spray piping 200 and a fixing member 390 or fixing members 390 that is/are fixed to the shell 110. The fixing member(s) 390 may be e.g. welded to the shell 110. Referring to Fig. 4c, alternatively or in addition, secondary parts 322, 324, 326 of the perforated plate 300 may be used to fix the plate 300 to the shell. Referring to Fig. 4c, in an embodiment, at least a first primary part 321, a second primary part 323, and a third primary part 325 of the edge 320 of the perforated plate 300 are separated from the shell 110. Moreover, at least a first secondary part 322, a second secondary part 324, and a third secondary part 326 of the edge 320 of the perforated plate 300 are fixed to the shell 110 for example by welding. Furthermore each one of the first secondary part 322, the second secondary part 324, and the third secondary part 326 of the edge 320 of the perforated plate 300 is arranged between two of the first primary part 321, the second primary part 323, and the third primary part 325 of the edge 320 of the perforated plate 300 in such a direction dir₃₂₀ of the edge 320 of the perforated plate 300 that is perpendicular to the longitudinal direction Sz. As indicated above, having the primary parts 321, 323, 325 has the effect that also the secondary parts 322, 324, 326 are rinsed by the scrubbing liquid. This has the effect that acidic liquid, such as sulphuric acid, does not accumulate below the secondary parts. Sulphuric acid has been found to cause corrosion problems in wet scrubbers.

Referring to Fig. 4d, the perforated plate 300 may be arranged in its place by both fixing a part (or some parts) of the plate to the shell 110 directly and using at least a fixing member 390. Thus, in an embodiment, multiple primary parts (321, 323, 325) of the edge 320 of the perforated plate 300 are separated from the shell 110. Moreover, [A] at least a first secondary part 322 of the edge 320 of the perforated plate 300 is fixed to the shell 110 for example by welding and/or [B] the scrubber 100 comprises a fixing member 390 that joins a secondary part (324, 326) of the edge 320 of the perforated plate 300 to the shell 110. Moreover, each one of the secondary parts (322, 324, 326) of the edge 320 of the perforated plate 300 is arranged between two primary parts (321, 323, 325) of the edge 320 of the perforated plate 300. The term "in between" herein refers to being in between in such a direction dir₃₂₀ of the edge 320 of the perforated plate 300 that is perpendicular to the longitudinal direction Sz. Preferably, the number of secondary parts (322, 324, 326) is at least three. However, if a secondary part (322, 324, 326) is too long in the direction dir₃₂₀ of the edge 320, it may happen that the scrubbing liquid flowing alongside the first part (321, 323, 325) does not properly rinse the second parts (322, 324, 326) and/or the fixing elements 390. Therefore, in an embodiment, a length of each one of the second parts (322, 324, 326) of the edge 320 in the direction dir₃₂₀ of the edge 320 of the perforated plate 300, the direction dir₃₂₀ being perpendicular to the longitudinal direction Sz, is at most 30 cm or at most 20 cm. In a similar manner, in an embodiment, a length of each one of the fixing members 390 in the direction dir₃₂₀ of the edge 320 of the perforated plate 300, the direction dir₃₂₀ being perpendicular to the longitudinal direction Sz, is at most 25 cm. Preferably each one of these length concerning the secondary parts and the fixing members is at most 30 cm or at most 20 cm. Preferably, the scrubber comprises at least three secondary parts (322, 324, 326) of the edge 320, that are arranged between two primary parts (321, 323, 325) of the edge 320.

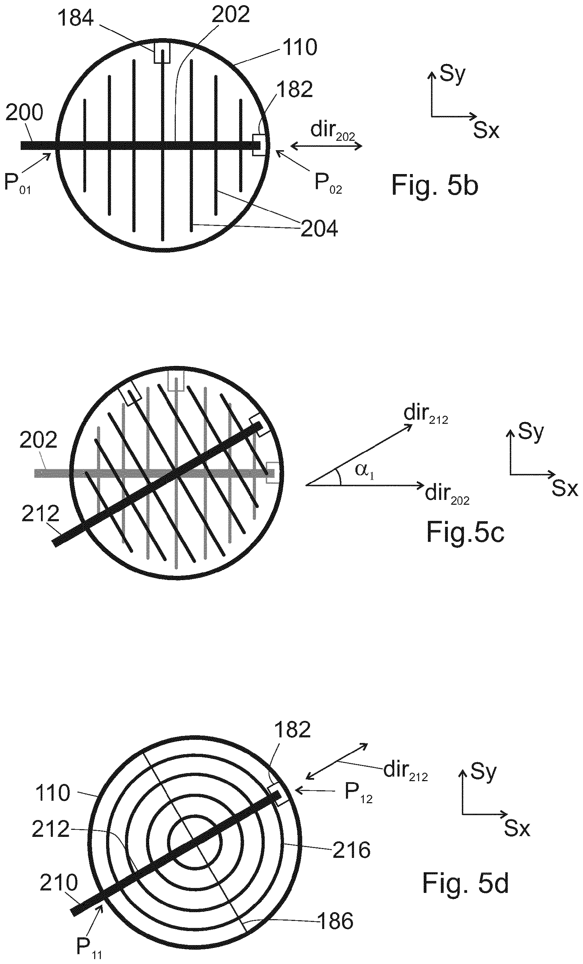

Figure 5a shows a preferable configuration for the first spray piping 210. Figure 5d shows another configuration for the first spray piping 210. Referring to Figs. 5a and 5d, the first spray piping 210 comprises a first main pipe 212. The first main pipe 210 extends straight in the interior 102 and in a first direction dir₂₁₂ from a first primary part P₁₁ of the shell 110 towards a first secondary part P₁₂ of the shell 110. The first main pipe 210 has a tubular profile shape that extends in the first direction dir₂₁₂. The first secondary part P₁₂ of the shell 110 is opposite to the first primary part P₁₁ of the shell 110. Thus, the first direction dir₂₁₂ is substantially perpendicular to the longitudinal direction Sz. For example, the first direction dir₂₁₂ may form an angle of from 75 to 105 degrees with the longitudinal direction Sz.

Within the first primary part P₁₁ of the shell 110, the first main pipe 212 extends through the shell 110 so that scrubbing liquid is conveyed from exterior to the interior 102. Alternatively, piping may be arranged to the interior 102 so that the scrubbing liquid may be conveyed to the first primary part P₁₁ from elsewhere. The first main pipe 212 is connected to the shell 110 at the first primary part P₁₁. The first main pipe 212 may be connected to the shell 110 by at least the aperture through which the first main pipe 212 extends. Preferably, the first direction dir₂₁₂ forms an angle of from 75 degrees to 105 degrees with the shell 110 at the aperture.

The first main pipe 212 is connected to the shell 110 at the first secondary part P₁₂ by a primary connector 182. Preferably, the primary connector 182 allows for the first main pipe 212 to move relative to the primary connector 182 in the first direction dir₂₁₂. Thus, the connection in between the primary connector 182 and the first main pipe 212 allows for the shell 110 and the first main pipe 212 to thermally expand irrespective of each other. Referring to Fig. 5e, the primary connector 182 may e.g. limit a circular aperture 183, through which the first main pipe 212 extends. A diameter of the circular aperture 183 may be substantially equal to the diameter of the first main pipe 212 so that the primary connector 182 connects the first main pipe 212 to the shell 110 in a lateral direction, i.e. radial direction of the circular aperture 183. The primary connector 182 may be e.g. welded to the shell 110. A similar primary connector 182 is shown in Fig. 5d. As indicated in Figs. 5e and 5b, the supportive main pipe 202 may extend through an aperture 183 of another primary connector 182.

What has and will be said about the structure of the first spray piping 210 applies also to the structure of the supportive spray piping 200 as well as to a structure of a second spray piping 220 and a structure of a third spray piping 230; and further spray pipings (240, 250), if present.

Thus, and with reference to Fig. 5b, in an embodiment, the supportive spray piping 200 comprises a supportive main pipe 202 extending straight in the interior 102 and in a zeroth direction dir₂₀₂ from a zeroth primary part P₀₁ of the shell 110 towards a zeroth secondary part P₀₂ of the shell 110, the zeroth secondary part P₀₂ of the shell 110 being opposite to the zeroth primary part P₀₁ of the shell 110. The supportive main pipe 202 has a tubular shape extending in the direction dir₂₀₂. Thus, the zeroth direction dir₂₀₂ is substantially perpendicular to the longitudinal direction Sz. For example, the zeroth direction dir₂₀₂ may form an angle of from 75 to 105 degrees with the longitudinal direction Sz. An end of the supportive main pipe 202 may be connected to the zeroth secondary part P₀₂ of the shell 110 by another primary connector 182. The supportive main pipe 202 may be connected to the shell 110 by at least an aperture through which the supportive main pipe 202 extends. Preferably, the zeroth direction dir₂₀₂ forms an angle of from 75 degrees to 105 degrees with the shell 110 at the aperture.

Figure 5c shows the first spray piping 210, in particular the first main pipe 212, and the supportive spray piping 200, in particular the supportive main pipe 202 in the same figure. Referring to Fig. 5c, in an embodiment, the first direction dir₂₁₂ forms a first angle α₁ of at least 5 degrees with the zeroth direction dir₂₀₂. In other words, the direction dir₂₁₂ of the first main pipe 212 forms a first angle α₁ of at least 5 degrees with the direction dir₂₀₂ of the supportive main pipe 202 of the supportive spray piping 200. The first angle α₁ may be e.g. at most 175 degrees or at most 85 degrees.

Preferably, the first main pipe 212 comprises nozzles 215 for spraying the scrubbing liquid into the interior 102. Preferably, the supportive main pipe 202 comprises nozzles 205 for spraying the scrubbing liquid into the interior 102. Such nozzles are depicted e.g. in Fig. 2a.

Referring to Fig. 5a, in an embodiment, the first spray piping 210 comprises the first main pipe 212 extending straight in the interior 102 and first transversal pipes 214 extending from the first main pipe 212 in a first secondary direction. The first transversal pipes 214 have a tubular shape that extends in the first secondary direction. The first secondary direction is preferably substantially perpendicular to the longitudinal direction Sz. The term "substantially perpendicular" refers here to an angle of from 75 to 105 degrees, as for the direction dir₂₁₂ of the first main pipe 212. More preferably, first secondary direction is perpendicular, or at least substantially perpendicular, also to the direction dir₂₁₂ of extension of the first main pipe 212. Also here the term "substantially perpendicular" refers here to an angle of from 75 to 105 degrees. In an embodiment, the first transversal pipes 214 comprise nozzles 215 for spraying the scrubbing liquid into the interior 102. In a preferable embodiment, both the first main pipe 212 and the first transversal pipes 214 comprise nozzles 215 for spraying the scrubbing liquid into the interior 102.

At least one of the first transversal pipes 214 may be attached to the shell 110 with a secondary connector 184, as indicated in Fig. 5a. Preferably each one of the first transversal pipes 214 are be attached to the shell 110 with a secondary connector 184. For clarity, Fig. 5a does not show a secondary connector for each one of the transversal pipes 214. An example of a secondary connector 184 is shown in Fig. 5f. The secondary connector 184 may limit an aperture 185, through which the first transversal pipe 214 extends, as indicated in Figs. 5a and 5f. Thus, the secondary connector 184 allows for the first transversal pipe 214 to move relative to the secondary connector 184 in a longitudinal direction of the first transversal pipe 214. Moreover, a width of the aperture 185 in the first direction dir₂₁₂ is at least 25 % greater than a diameter of the first transversal pipe 214 to allow the first transversal pipe 214 to move relative to the secondary connector 184 also in the first direction dir₂₁₂. This type of secondary connector is preferably used, since, when the first main pipe 212 and the shell 110 expand a different amount, the first transversal pipe 214 moves relative to the shell 110 in the direction dir₂₁₂ of the first main pipe 212. Because of the shape of the aperture 185, movement in this direction is possible without generating stress. However, in the longitudinal direction Sz of the shell 100, the height of the aperture 185 may be substantially equal to the diameter of the first transversal pipe 214 so that the secondary connector 184 connects the first transversal pipe 214 to the shell 110 in at least the longitudinal direction Sz of the shell 110. The second connector 184 may be e.g. welded to the shell 110. What has been said about the secondary connector 184 and the first transversal pipe 214 applies, *mutatis mutandis,* to a secondary connector 184 connecting a supportive transversal pipe 204 to the shell 110.

Referring to Fig. 5b, in an embodiment, the supportive spray piping 200 comprises the supportive main pipe 202 extending straight in the interior 102 and supportive transversal pipes 204 extending from the supportive main pipe 202 in a zeroth secondary direction. The supportive transversal pipes 204 have a tubular shape that extends in the zeroth secondary direction. The zeroth secondary direction is preferably perpendicular or substantially perpendicular to the longitudinal direction Sz. More preferably, zeroth secondary direction is perpendicular or substantially perpendicular also to the direction dir₂₀₂ of extension of the supportive main pipe 202. In an embodiment, the supportive transversal pipes 204 comprise nozzles 205 for spraying the scrubbing liquid into the interior 102. In a preferable embodiment, both the supportive main pipe 202 and the supportive transversal pipes 204 comprise nozzles 205 for spraying the scrubbing liquid into the interior 102.

In Fig. 5d, the first spray piping 210 is also connected to the shell 110 with a tertiary connector 186. The tertiary connector 186 connects annular pipes 216 of the first spray piping 210 to the shell 110. The tertiary connector 186 comprises apertures, through which the annular pipes 216 extend.

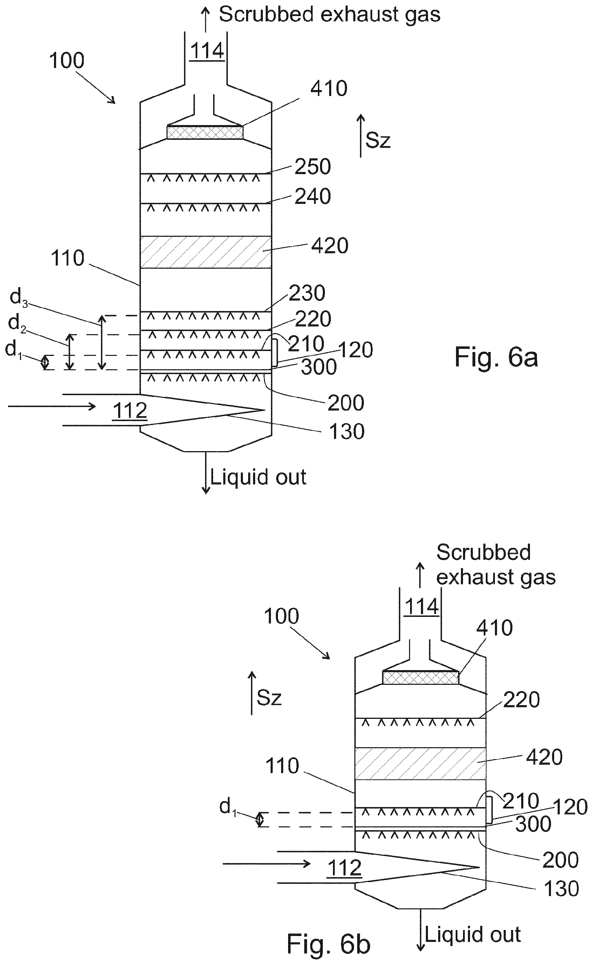

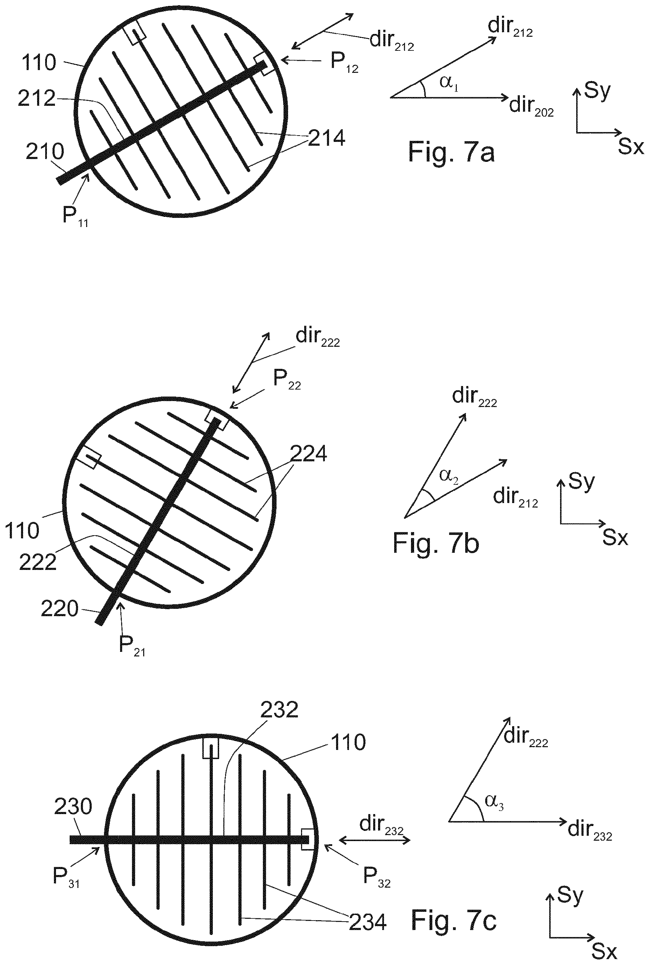

Referring to Figs. 6a and 6b, in an embodiment, the scrubber 100 comprises in the interior 102, downstream from the perforated plate 300, and upstream from the first outlet 114, a second spray piping 220 configured to spray scrubbing liquid into the interior 102. A distance d₂ between the perforated plate 300 and the second spray piping 220 is at most two metres, at most 1.5 metres, or at most 1 metre, to enable maintenance of the second spray piping 220 from the perforated plate 300. Also preferably, a distance between the first spray piping 210 and the second spray piping 220 is at least 300 mm, such as at least 450 mm. Mathematically: |d₁-d₂| ≥ 300 mm or |d₁-d₂| ≥ 450 mm. Having a reasonable distance in between the spray pipings 210 and 220 ensures uniform spraying of scrubbing liquid in the scrubber 100. The spraying is even more uniform, when the main pipes 212, 222 of the spray pipings 210, 220 are also oriented in different directions, as indicated in Figs. 7a and 7b. The distance d₂ refers to a distance in the longitudinal direction Sz.

Referring to Figs. 6a, in an embodiment, the scrubber 100 comprises in the interior 102, downstream from the perforated plate 300, and upstream from the first outlet 114, a third spray piping 230 configured to spray scrubbing liquid into the interior 102. A distance d₃ between the perforated plate 300 and the third spray piping 230 is at most two metres, at most 1.5 metres, or at most 1 metre, to enable maintenance of the third spray piping 230 from the perforated plate 300. Also preferably, the distances between the third spray piping 230 and both the first spray piping 210 and the second spray piping 220 are at least 300 mm, such as at least 450 mm. Mathematically: |d₃-d₁| ≥ 300 mm and |d₃-d₂| ≥ 300 mm; or |d₃-d₁| ≥ 450 mm and |d₃-d₂| ≥ 450 mm. Having a reasonable distance in between the spray pipings 230; and 210 and 220, ensures uniform spraying of liquid in the scrubber 100. The spraying is even more uniform, when the main pipes 212, 222, 232 of the spray pipings 210, 220, 230 are also oriented in different directions, as indicated in Figs. 7a to 7c. The distance d₃ refers to a distance in the longitudinal direction Sz.

For similar reasons, if the scrubber 100 comprises the supportive spray piping 200, a distance between the supportive spray piping 200 and the first spray piping 210 is preferably at least 300 mm, such as at least 450 mm. This ensures uniform spraying of scrubbing liquid in the scrubber 100. The spraying is even more uniform, when the main pipes 202, 212 of the spray pipings 200, 210 are also oriented in different directions, as indicated in Figs. 5a to 5c.

In case the scrubber comprises more than one spray pipings in between the perforated plate 300 and the first outlet 114, preferably, at least a part of the hatch 120 is arranged in the longitudinal direction Sz, in between the perforated plate 300 and that one of the spray pipings that is closest to the perforated plate. This also makes it more easy for an operator to enter a proper location for maintaining the first spray piping. In the figures, the first spray piping 210 is the closest one in the aforementioned sense.

As clear from the discussion above, the scrubber 100 of Fig. 6a is free from such a structure that prevents maintenance of the second spray piping 220 from the perforated plate 300. Moreover, the scrubber 100 of Fig. 6a is free from such a structure that prevents maintenance of the third spray piping 230 from the perforated plate 300. Examples of such structures have been discussed above in the context of maintaining the first spray piping 210.

Referring to Fig. 6a the scrubber 100 may comprise a packed bed 420. Moreover, the scrubber may comprise a fourth spray piping 240 and optionally also a fifth spray piping 250. The first spray piping 210 may be arranged on a first side of the packed bed 420, and the fourth and fifth spray pipings 240, 250 may be arranged on a second, opposite, side of the packed bed 420. The fourth and fifth spray pipings 240, 250 may be arranged more than 2 metres away from the perforated plate 300. Regardless of the distance, the packed bed 420 prevents the maintenance of the fourth and fifth spray pipings 240, 250 from the perforated plate 300.

Referring to Fig. 6b the scrubber 100 may comprise a packed bed 420, even if it does not comprise the second and third spray pipings 220, 230 on the first side of the packed bed 420. The scrubber of Fig. 6b comprises, on the second side of the packed bed 420, a second spray piping 220. The second spray piping 220 may be arranged more than 2 metres away from the perforated plate 300. In Fig. 6b, the packed bed 420 prevents the maintenance of the second spray pipings 220 from the perforated plate 300. In case the scrubber 100 comprises a packed bed 420, the scrubber 100 preferably comprises a spray piping arranged downstream from the packed bed 420 and upstream from the first outlet 114, preferably upstream also from a droplet separator 410.

When the scrubber comprises a packed bed 420, in use, the scrubbing solution flows at the surfaces of the packing material of the packed bed 420 to ascertain a large contact surface between the scrubber liquid and the exhaust gas that flows through the packed bed. The scrubber 100 needs not have a packed bed. The scrubber 100 may also comprise a zone with a packed bed, such as the upper part of the scrubber 100 of Fig. 6a or 6b, and a zone without a packed bed, such as the lower part of the scrubber 100 of Fig. 6a or 6b.

Fig 7a shows the first spray piping 210 of Fig. 5a, and also the first angle α₁ in between the direction dir₂₁₂ of the first main pipe 212 and the direction dir₂₀₂ of the supportive main pipe 202.

Fig 7b shows the second spray piping 220 in a top view, and also a second angle α₂ in between a direction dir₂₂₂ of a second main pipe 222 and the direction dir₂₁₂ of the first main pipe 212. The second spray piping 220 comprises the second main pipe 222. The second main pipe 222 extends straight in the interior 102 and in the second direction dir₂₂₂ from a second primary part P₂₁ of the shell 110 towards a second secondary part P₂₂ of the shell 110. The second main pipe 222 has a tubular profile shape that extends in the second direction dir₂₂₂. The second direction dir₂₂₂ may be perpendicular or substantially perpendicular (in the meaning discussed above for dir₂₁₂) to the longitudinal direction Sz. The second secondary part P₂₂ of the shell 110 is opposite to the second primary part P₂₁ of the shell 110. The second main pipe 222 is connected to the shell 110 at the second secondary part P₂₂ by a primary connector 182. What has been said about the connection between the first main pipe 212 and the shell 110 applies, *mutatis mutandis,* to the connection between the second main pipe 222 and the shell 110. A second angle α₂ of at least 5 degrees is left in between the second direction dir₂₂₂ and the first direction dir₂₁₂. The second angle α₂ may be e.g. at most 175 degrees or at most 85 degrees. The second spray piping 220 preferably further comprises second transversal pipes 224 extending from the second main pipe 222 in a second secondary direction. The second transversal pipes 224 have a tubular shape that extends in the second secondary direction. The second secondary direction is preferably at least substantially perpendicular to the longitudinal direction Sz. More preferably, the second secondary direction is at least substantially perpendicular also to the direction dir₂₂₂ of extension of the second main pipe 222. What has been said about being substantially perpendicular in the context of the pipes 214 applies to the pipes 224 *mutatis mutandis.* Preferably, the second main pipe 222 and/or the second transversal pipes 224 comprise(s) nozzles for spraying scrubbing liquid.

Fig 7c shows the third spray piping 230 in a top view, and also a third angle α₃ in between a direction dir₂₃₂ of a third main pipe 232 and the direction dir₂₂₂ of the second main pipe 222. The third spray piping 230 comprises the third main pipe 232. The third main pipe 232 extends straight in the interior 102 and in the third direction dir₂₃₂ from a third primary part P₃₁ of the shell 110 towards a third secondary part P₃₂ of the shell 110. The third main pipe 232 has a tubular profile shape that extends in the third direction dir₂₃₂. The third secondary part P₃₂ of the shell 110 is opposite to the third primary part P₃₁ of the shell 110. The third direction dir₂₃₂ may be perpendicular or substantially perpendicular (in the meaning discussed above for dir₂₁₂) to the longitudinal direction Sz. The third main pipe 232 is connected to the shell 110 at the third secondary part P₃₂ by a primary connector 182. What has been said about the connection between the first main pipe 212 and the shell 110 applies, *mutatis mutandis,* to the connection between the third main pipe 232 and the shell 110. A third angle α₃ of at least 5 degrees is left in between the third direction dir₂₃₂ and the second direction dir₂₂₂. The third angle α₃ may be e.g. at most 175 degrees or at most 85 degrees. Preferably also, an angle of at least 5 degrees (e.g. from 5 to 175 degrees or from 5 to 85 degrees) is left in between the third direction dir₂₃₂ and the first direction dir₂₁₂ (not shown in Fig. 7c). The third spray piping 230 preferably further comprises third transversal pipes 234 extending from the third main pipe 232 in a third secondary direction. The third transversal pipes 234 have a tubular shape that extends in the third secondary direction. The third secondary direction is preferably at least substantially perpendicular to the longitudinal direction Sz. More preferably, the third secondary direction is at least substantially perpendicular also to the direction dir₂₃₂ of extension of the third main pipe 232. What has been said about being substantially perpendicular in the context of the pipes 214 applies to the pipes 234 *mutatis mutandis.* Preferably, the third main pipe 232 and/or the third transversal pipes 234 comprise(s) nozzles for spraying scrubbing liquid.

Even if not shown in the figures, when the scrubber comprises at least two spray pipings (e.g. 240, 250) on the second side of a packed bed, wherein the first spray piping 210 is arranged on the first side of the packed bed, preferably also each one of the at least two spray pipings on the second side of a packed bed comprise a main pipe. Moreover, the main pipes of the different spray pipings on the second side of a packed bed are preferably arranged relative to each other at an angle, as detailed for the spray pipings 210, 220, 230 with the first, second, and third angles α₁, α₂, and α₃.

The scrubber 100 can be made from an old scrubber by providing the old scrubber with the perforated plate 300. In the alternative, the perforated plate 300 itself may be assembled from parts. For example, Fig. 9 shows a perforated plate 300 made up of four parts 300a, 300b, 300c, and 300d. When the scrubber 100 is made from an old scrubber, the old scrubber is being adapted. Thus, the invention relates also to a method for adapting an old scrubber. The old scrubber comprises: a shell 110 limiting an interior 102 of the old scrubber, the shell 110 extending in a longitudinal direction Sz, an inlet 112 for letting in exhaust gas to the interior 102, a first outlet 114 for letting out scrubbed exhaust gas from the interior 102; and in the interior 102 in between the inlet 112 and the first outlet 114, a first spray piping 210 configured to spray scrubbing liquid into the interior 102.

The old scrubber may be adapted by arranging available the perforated plate 300 or parts (300a, 300b, 300c, 300d) of a perforated plate 300. If only the parts (300a - 300d) are available, the perforated plate 300 is assembled from the parts. The plate 300 may be assembled to its location within the old scrubbed.

The perforated plate 300 is arranged (or assembled from the parts) to the interior 102 of the old scrubber to such a position that the perforated plate 300 has a normal N to the longitudinal direction Sz. The perforated plate 300 is arranged (or assembled from the parts) to such a location that a distance d₁ between the perforated plate 300 and the first spray piping 210 of the old scrubber is at most two metres, such as at most 1.5 metres, or at most 1 metre. As indicated above, such a distance enables maintenance of the first spray piping 210 from the perforated plate 300 without an auxiliary support, such as a ladder.

In case the old scrubber does not have a hatch or does not have a hatch at a proper location relative to the perforated plate 300, a hatch 120 can be provided to the shell 110 of the old scrubber for allowing entrance of an operator into the interior 102. The hatch 120 may be provided to such a location that at least a part of the hatch 120 is arranged, in the longitudinal direction Sz, in between the perforated plate 300 and the first outlet 114 and at most two metres (or at most 1.5 metres or at most 1 metre or at most 0.5 metres) from the perforated plate 300. What else has been said about the location of hatch in the scrubber 100 applies also for the method.

Preferably, the perforated plate 300 is arranged (or assembled from the parts) to such a location that the perforated plate 300 is supported to a supportive spray piping 200 at least in use.

The first spray piping 210, e.g. at least some nozzles 215 thereof, of such a scrubber 100, which may have been formed by adapting an old scrubber, may be maintained from the perforated plate 300. In order to maintain the first spray piping 210, an operator enters the interior 102 of the scrubber 100 through the hatch 120 and arranges him/herself onto the first side of the of the perforated plate 300. While being on the first side of the perforated plate 300 and being supported to the perforated plate 300, the operator maintains at least a part of the first spray piping 210. He/She may e.g. replace or repair at least one of the nozzles 215 of the first spray piping 210.

## Claims

1. A scrubber (100) for scrubbing exhaust gas of a combustion engine (510), the scrubber (100) comprising,
- a shell (110) limiting an interior (102) of the scrubber (100), the shell (110) extending in a longitudinal direction (Sz),
- an inlet (112) for letting in the exhaust gas to the interior (102) and a first outlet (114) for letting out scrubbed exhaust gas from the interior (102),
- in the interior (102) in between the inlet (112) and the first outlet (114), a first spray piping (210) configured to spray scrubbing liquid into the interior (102), and
- in between the inlet (112) and the first spray piping (210), a perforated plate (300) suitable for use as a platform for maintaining at least the first spray piping (210), wherein
- the perforated plate (300) has a normal (N) to the longitudinal direction (Sz), whereby the first spray piping (210) is arranged on a first side of the perforated plate (300),
- a distance (di) between the perforated plate (300) and the first spray piping (210) is at most two metres to enable maintenance of the first spray piping (210), and
- the scrubber (100) comprises a hatch (120) suitable for a person to enter the interior (102).

2. The scrubber (100) of the claim 1, comprising
- in the interior (102) in between the inlet (112) and the perforated plate (300), a supportive spray piping (200) configured to spray scrubbing liquid into the interior (102), wherein
- the supportive spray piping (200) is configured to mechanically support the perforated plate (300) from a second side of the perforated plate (300), the second side being opposite to the first side of the perforated plate (300); preferably,
- the supportive spray piping (200) is in contact with the perforated plate (300) or the supportive spray piping (200) is configured to be in contact with the perforated plate (300) at least when the perforated plate (300) is used as a support for maintaining the first spray piping (210);
more preferably
- the perforated plate (300) is movable with respect to the to the supportive spray piping (200), for example, the perforated plate (300) is not fixed to the supportive spray piping (200) by welding or with a screw or a bolt.

3. The scrubber (100) of the claim 1 or 2, wherein
- at least a part of the hatch (120) is arranged, in the longitudinal direction (Sz), in between the perforated plate (300) and the first outlet (114); preferably
- at least a part of the hatch (120) is arranged at most two metres from the perforated plate (300).

4. The scrubber (100) of any of the claims 1 to 3, wherein
- the perforated plate (300) limits apertures (310),
- the perforated plate (300) including the apertures (310) covers at least 80 % of a cross-sectional area of the interior (102), the cross-sectional area being limited by the shell (110), and
- a total area of the apertures (310) is from 33 % to 95 % of the cross-sectional area of the perforated plate (300), the cross-sectional area of the perforated plate (300) including the total area of the apertures (310); preferably,
- the perforated plate (300) limits apertures (310) having an area of at least 25 (mm)² and at most 5000 (mm)².

5. The scrubber (100) of any of the claims 2 to 4, wherein
- the first spray piping (210) comprises a first main pipe (212) extending straight in the interior (102) and in a direction (dir₂₁₂) from a first primary part (P₁₁) of the shell towards a first secondary part (P₁₂) of the shell (110), the first secondary part (P₁₂) of the shell (110) being opposite to the first primary part (P₁₁) of the shell (110), and
- the supportive spray piping (200) comprises a supportive main pipe (202) extending straight in the interior (102) and in a further direction (dir₂₀₂) from a further primary part (P₀₁) of the shell (110) to a further secondary part (P₀₂) of the shell (110), the further secondary part (P₀₂) of the shell (110) being opposite to the further primary part (P₀₁) of the shell (110), wherein
- the direction (dir₂₁₂) of the first main pipe (212) forms an angle (α₁) of at least 5 degrees with the direction (dir₂₀₂) of the supportive main pipe (202); preferably,
- the first and/or the supportive main pipe(s) (212, 202) comprise or comprises nozzles (215, 205) for spraying the scrubbing liquid into the interior (102) and/or
- the first direction (dir₂₁₂) and the further direction (dir₂₀₂) form an angle of from 75 degrees to 105 degrees with the longitudinal direction (Sz) and/or
- the perforated plate (300) is movable with respect to the to the supportive main pipe (202), for example, the perforated plate (300) is not fixed to the supportive main pipe (202) by welding or with a screw or a bolt.

6. The scrubber (100) of any of the claims 1 to 5, wherein
- the first side of the perforated plate (300) is free from such elements that are fixed to the perforated plate (300) and protrude from the perforated plate at least 5 cm.

7. The scrubber (100) of any of the claims 1 to 6, wherein
- the perforated plate (300) extends laterally to an edge (320) of the perforated plate (300) and
- at least a first primary part (321) of the edge (320) of the perforated plate (300) is separated from the shell (110);
preferably
- multiple primary parts (321, 323, 325) of the edge (320) of the perforated plate (300) are separated from the shell (110); and
- at least a first secondary part (322) of the edge (320) of the perforated plate (300) is fixed to the shell (110) for example by welding and/or
- the scrubber 100 comprises a fixing member (390) that joins a secondary part (324, 326) of the edge (320) of the perforated plate (300) to the shell (110), wherein
- each one of the secondary parts (322, 324, 326) of the edge (320) of the perforated plate (300) is arranged between two primary parts (321, 323, 325) of the edge (320) of the perforated plate (300).

8. The scrubber (100) of any of the claims 1 to 7, wherein
- the first spray piping (210) comprises a first main pipe (212) extending straight in the interior (102) and first transversal pipes (214) extending from the first main pipe (212) and/or
- the supportive spray piping (200) comprises a supportive main pipe (202) extending straight in the interior (102) and supportive transversal pipes (204) extending from the supportive main pipe (202);
preferably,
- the first (214) transversal pipes (214) and/or the supportive transversal pipes (204) comprise nozzles (215, 205) for spraying the scrubbing liquid into the interior (102) and/or
- the perforated plate (300) is movable with respect to the to the supportive transversal pipes (204), for example, the perforated plate (300) is not fixed to the supportive transversal pipes (204) by welding or with a screw or a bolt.

9. The scrubber (100) of any of the claims 1 to 8, comprising
- in the interior (102) in between the perforated plate (300) and the first outlet (114), a second spray piping (220) configured to spray scrubbing liquid into the interior (102), wherein
- a distance (d₂) between the perforated plate (300) and the second spray piping (220) is at most two metres to enable maintenance of the second spray piping (220);
preferably the scrubber further comprises
- in the interior (102) in between the perforated plate (300) and the first outlet (114), a third spray piping (230) configured to spray scrubbing liquid into the interior (102), wherein
- a distance (d₃) between the perforated plate (300) and the third spray piping (230) is at most two metres to enable maintenance of the third spray piping (230).

10. The scrubber (100) of any of the claims 1 to 9, comprising
- a gas distributor (130) configured to distribute exhaust gas into the interior (102), wherein
- the gas distributor (130) is arranged upstream from the perforated plate (300) and downstream from the inlet (112);
preferably,
- the gas distributor (130) is arranged upstream also from the supportive spray piping (200).

11. The scrubber (100) of any of the claims 1 to 10, comprising
- a second outlet (140) for letting out scrubbing liquid from the interior (102), wherein
- the second outlet (140) is arranged to prevent scrubbing liquid from accumulating in the interior (102) of the shell (110) in use.

12. An arrangement (500, 505), such as a ship (505), comprising,
- the scrubber (100) of any of the claims 1 to 11,
- a combustion engine (510), and
- an exhaust gas channel (515) configured to convey exhaust gas from the combustion engine (510) to the scrubber (100);
preferably,
- the arrangement (500, 505) is configured not to spray liquid onto the exhaust gases before the inlet (112) of the scrubber (100).

13. A method for adapting an old scrubber, the old scrubber comprising
- a shell (110) limiting an interior (102) of the old scrubber, the shell (110) extending in a longitudinal direction (Sz),
- an inlet (112) for letting in exhaust gas to the interior (102),
- a first outlet (114) for letting out scrubbed exhaust gas from the interior (102),
- in the interior (102) in between the inlet (112) and the first outlet (114), a first spray piping (210) configured to spray scrubbing liquid into the interior (102),
the method comprising
- arranging available a perforated plate (300) or parts (300a, 300b, 300c) of a perforated plate (300),
- arranging the perforated plate (300) or assembling a perforated plate (300) from the parts (300a, 300b, 300c) of a perforated plate to the interior (102) such that the perforated plate (300) has a normal (N) to the longitudinal direction (Sz) and fixing the perforated plate (300) to such a location that a distance (di) between the perforated plate (300) and the first spray piping (210) of the old scrubber is at most two metres to enable maintenance of the first spray piping (210) from the perforated plate (300).

14. The method of claim 13, comprising
- providing a hatch (120) to the shell (110) of the old scrubber for allowing entrance into the interior (102) and/or
- supporting the perforated plate (300) to a supportive spray piping (200); preferably the method comprises,
- providing the hatch (120) to such a location that at least a part of the hatch (120) is arranged, in the longitudinal direction, in between the perforated plate (300) and the first outlet (114) and at most two metres from the perforated plate (300).

15. A method for maintaining a scrubber (100) of any of the claims 1 to 11, the method comprising
- entering the interior (102) of the scrubber (100) through the hatch (120),
- being on and supported to the first side of the perforated plate (300), and
- maintaining at least a part of a first spray piping (210) while being supported to the perforated plate (300).
